# FASCICULE DE BREVET EUROPEEN

(11) **EP 2 707 787 B1**
(45) Date de publication et mention de la délivrance du brevet: **14.12.2016**
(21) Numéro de dépôt: 12725119.7
(22) Date de dépôt: 09.05.2012
(51) Int. Cl.: G06F 3/01

(54) **INTERFACE TACTILE VIBRANTE TRANSPARENTE.**
VIBRIERENDE TRANSPARENTE BERÜHRUNGSOBERFLÄCHE
TRANSPARENT VIBRATING TOUCH INTERFACE

(30) Priorité: 09.05.2011 FR 1153963
(43) Date de publication de la demande: 19.03.2014
(73) Titulaire: Université Lille 1 - Sciences Et Technologies, 59650 Villeneuve D'ascq Cedex (FR)
(72) Inventeur: GIRAUD, Frédéric, F-59700 Marcq En Baroeul (FR); AMBERG, Michel, F-59650 Villeneuve D'ascq (FR); LEMAIRE-SEMAIL, Betty, F-59000 Lille (FR)
(74) Mandataire: Pontet Allano & Associes
(86) Numéro de dépôt international: PCT/FR2012/051018
(87) Numéro de publication internationale: WO 2012/153061

(56) Documents cités:
- EP-A1- 1 956 466
- US-A1- 2005 248 547
- US-A1- 2009 284 485
- HIROYUKI KOTANI ET AL: "Glass Substrate Surface Acoustic Wave Tactile Display With Visual Information", MECHATRONICS AND AUTOMATION, PROCEEDINGS OF THE 2006 IEEE INTERNATIONA L CONFERENCE ON, IEEE, PI, 1 juin 2006 (2006-06-01), pages 1-6, XP031026733, ISBN: 978-1-4244-0465-0

## Description

La présente invention concerne une interface tactile mettant en oeuvre une surface de contact vibrante pouvant être utilisée dans un écran d'affichage ainsi qu'un écran d'affichage mettant en oeuvre une telle interface.

Le domaine de l'invention est le domaine des interfaces tactiles vibrantes pour écran d'affichage et plus particulièrement des interfaces pour écran d'affichage permettant de reproduire tactilement des textures ou rugosités grâce à une surface de contact et des moyens pour générer des vibrations dans la surface de contact.

Il existe actuellement différentes interfaces tactiles vibrantes. Certaines interfaces tactiles exploitent un principe physique qui permet de contrôler le coefficient de friction ressenti : une vibration est créée au sein d'une plaque constituant une surface de contact, à fréquence ultrasonique, avec une amplitude micrométrique. Lorsque le doigt touche la plaque vibrante, un « coussin d'air » (Squeeze film ou zone de surpression) se développe entre la plaque et le doigt, diminuant ainsi le coefficient de friction entre le doigt et la plaque. La diminution du coefficient de friction est fonction de l'amplitude de la vibration générée. Pour générer cette vibration, des céramiques piézo-électriques sont utilisées

On connait une première catégorie d'interfaces tactiles vibrantes telles que l'interface tactile décrite dans la demande de brevet européen EP 1 956 466 déposée par la Demanderesse. Cette interface comporte une surface de contact et une couche de transducteurs faisant vibrer la surface de contact en ondes stationnaires et plus particulièrement des ondes de Lamb. La surface de contact est constituée par une des surfaces d'une plaque et la couche de transducteurs est déposée sur la surface opposée de cette plaque. Une telle interface ne peut pas être utilisée dans un écran d'affichage tactile.

Il existe d'autres interfaces tactiles vibrantes pouvant être utilisées dans des écrans d'affichage telles que l'interface tactile vibrante décrite dans la demande de brevet US 2009/0284485. Cette interface est constituée d'une surface de contact transparente, par exemple une surface d'une plaque en verre, et de transducteurs ultrasonores déposés sur la surface de contact. Une partie de la surface de contact autorise une observation visuelle d'un objet au travers de la surface de contact et donc peut être utilisée dans un écran d'affichage tactile d'un appareil électronique.

Cependant, dans l'interface tactile du document US2009/0284485, la surface de contact ne peut être utilisée entièrement pour l'observation d'objets au travers de la surface tactile. Autrement dit, pour utiliser l'interface tactile de ce document dans un écran d'affichage il est nécessaire d'utiliser une surface de contact plus grande que l'écran d'affichage ou un écran d'affichage plus petit que la surface de contact. La plaque de contact, servant de surface de contact, occupe donc plus de place que la surface pouvant être utilisée pour l'affichage.

Un but de l'invention est de proposer une interface tactile vibrante pour écran d'affichage présentant une plus grande surface de contact utilisable pour l'affichage que les interfaces tactiles vibrante connues, par rapport à la surface totale occupée par la plaque de contact.

Un autre but de la présente invention est de proposer une interface tactile vibrante dans laquelle toute la surface de contact peut être utilisée pour l'affichage.

L'invention permet d'atteindre ces buts par une interface tactile comportant une surface de contact et des moyens de mise en vibration de ladite surface de contact prévus pour générer dans ladite surface de contact des ondes stationnaires :
- ladite surface de contact comprend au moins une partie transparente réalisant une surface d'observation au travers de ladite interface tactile, et
- lesdits moyens de mise en vibration comprennent au moins une couche piézoélectrique rigide, solidaire de ladite surface de contact et disposée à la périphérie de ladite partie transparente ; et
ladite interface étant caractérisée en ce que ladite au moins une couche piézoélectrique est disposée dans un plan non parallèle à la surface de contact, c'est-à-dire présentant un angle non nul avec la surface de contact.

Dans l'interface selon l'invention, au moins une couche piézoélectrique est disposée dans un plan non parallèle à la surface de contact tout en étant solidaire de ladite surface de contact. L'au moins une couche piézoélectrique occupe donc moins de place que sa largeur sur la surface de contact, qui présente alors une plus grande surface pouvant être utilisée pour l'affichage, par rapport à la surface totale de contact.

C'est pourquoi l'interface selon l'invention présente une plus grande surface de contact utilisable pour l'affichage comparée aux interfaces tactiles vibrantes connues, par rapport à la surface totale occupée par la plaque de contact. De plus, avec l'interface selon l'invention toute la surface de contact peut être utilisée pour l'affichage.

Selon l'invention, au moins une couche piézoélectrique peut être disposée dans un plan présentant un angle compris entre 45° et 90° à la surface de contact.

Selon une version préférée, au moins une couche piézoélectrique est disposée dans un plan perpendiculaire à la surface de contact. Cette configuration permet d'avoir la plus grande taille de surface de contact transparente utilisable pour l'affichage sans accroître l'encombrement total. En effet, dans cette configuration, l'au moins une couche piézoélectrique n'occupe pas de place, ou très peu de place, sur la surface de contact, qui présente alors une plus grande surface pouvant être utilisée pour l'affichage, par rapport à la surface totale de contact.

Selon l'invention chaque couche piézoélectrique est agencée pour générer dans ladite surface de contact des ondes de surfaces acoustiques stationnaires dites ondes de Lamb ou de Rayleigh, et plus particulièrement des ondes de Lamb de l'ordre de quelques dizaines de kHz.

L'interface selon l'invention peut comprendre plusieurs couches piézoélectriques rigides, solidaires de ladite surface de contact, chacune étant disposée dans un ou plusieurs plans non parallèles à la surface de contact, plus particulièrement dans un ou plusieurs plans présentant chacun un angle compris entre 45° et 90°, et préférentiellement dans un ou plusieurs plans perpendiculaires à la surface de contact.

Dans ce cas, au moins deux des couches peuvent être disposées du même côté de la surface de contact. Au moins deux couches peuvent également être disposées d'un côté et de l'autre de la surface de contact, autrement sur deux côtés opposés.

De la même manière, au moins deux couches peuvent être disposées dans un même plan.

Par ailleurs, au moins deux couches peuvent être disposées dans deux plans parallèles entre eux, ou dans deux plans perpendiculaires entre eux.

Tous ces exemples et modes de réalisation sont bien entendu compatibles entre eux.

Dans un exemple de réalisation particulier et nullement limitatif de l'interface selon l'invention :
- la surface de contact est réalisée par une plaque, dite de contact, et
- au moins une couche piézoélectrique comporte une plaque rigide, dite de support.

Dans ce cas, selon une première option, au moins une plaque de support peut être disposée sur la tranche de la plaque de contact. Plus particulièrement, la plaque de support peut être disposée sur la plaque de contact de sorte que la plaque de support fait saillie vers un côté de la plaque de contact uniquement.

Selon une deuxième option, au moins une plaque de support peut être disposée sur la plaque de contact par une de ses tranches.

L'interface selon l'invention peut par exemple comporter plusieurs couches piézoélectriques, au moins une réalisée selon la première option et une autre selon la deuxième option.

Dans tous les cas, la plaque de support et la plaque de contact peuvent être assemblées par tous moyens adéquats, par exemple par collage.

Selon un exemple de réalisation particulier, au moins une plaque de support peut être réalisée en cuivre ou en un alliage à base de cuivre. Le cuivre est un bon résonateur, c'est-à-dire qu'il a un bon coefficient de qualité. Par ailleurs, les cellules piézoélectriques, par exemple en céramiques, se collent facilement sur le cuivre, et c'est un matériau conducteur. De plus, le cuivre est facilement usinable.

Un alliage de cuivre est encore plus performant.

Selon d'autres exemples de réalisation, la plaque de support peut être réalisée en aluminium ou en acier.

Selon un exemple de réalisation l'interface selon l'invention, la surface de contact est de forme parallélépipédique. L'interface comporte deux couches piézoélectriques disposées sur deux côtés opposés de la forme parallélépipédique.

Plus particulièrement, les deux couches piézoélectriques peuvent être disposées sur les deux côtés opposés de plus faibles longueurs.

Au moins une couche piézoélectrique peut comprendre une rangée d'au moins deux cellules piézoélectriques.

Lorsque la couche piézoélectrique comporte une plaque de support, au moins une cellule piézoélectrique peut être collée sur la plaque de support, par exemple avec de la colle cyano-acrylate ou toute autre colle polymérisant à haute température telle qu'une colle époxyde.

Avantageusement, la surface de contact peut être en verre transparent, en plastique rigide transparent, en polycarbonate, en plexiglas, ou une combinaison quelconque d'au moins deux de ces matériaux transparents, ou plus généralement en un ou plusieurs matériaux transparents à bon coefficient de qualité ou faible taux d'amortissement.

La surface de contact est de préférence entièrement transparente.

Les moyens de mise en vibration de la surface peuvent en outre comprendre des moyens d'alimentation électrique connectés à chacune des couches piézoélectriques.

Avantageusement, l'interface selon l'invention peut en outre comprendre des moyens pour capter une position, une vitesse, une accélération et/ou une force ou une pression appliquée par un doigt d'un utilisateur ou un pointeur ou une combinaison quelconque d'au moins deux de ces grandeurs.

L'interface selon l'invention peut avantageusement comprendre des moyens pour commander et faire varier une amplitude, une phase et/ou une fréquence de l'alimentation électrique délivrée par les moyens d'alimentation électrique ou une combinaison quelconque d'au moins deux de ces grandeurs.

Selon un autre aspect de l'invention il est proposé un écran d'affichage tactile pour appareil électronique comprenant une interface tactile selon l'invention et un écran d'affichage graphique visible au travers de ladite partie transparente. L'écran d'affichage graphique peut être un écran LCD, un écran plasma ou tout autre écran d'affichage.

Selon encore un autre aspect de l'invention il est proposé un appareil électronique comprenant un écran d'affichage tactile selon l'invention. Un tel appareil peut être, par exemple un téléphone portable, une tablette numérique, un appareil de jeux électronique ou un appareil pour stocker et/ou écouter des contenus multimédias.

D'autres avantages et caractéristiques apparaîtront à l'examen de la description détaillée de modes de réalisation, nullement limitatifs, et des dessins annexés sur lesquels
- les figures 1 à 4 sont des représentations schématiques de plusieurs modes de réalisation d'une interface selon l'invention ;
- la figure 5 est une représentation schématique d'une couche piézoélectrique mise en oeuvre dans l'interface selon l'invention ;
- les figures 6 et 7 sont des représentations schématiques de modes de solidarisation d'une plaque de support avec une plaque de contact ;
- la figure 8 est une représentation schématique d'un exemple de réalisation d'une interface complète selon l'invention, et
- la figure 9 est une représentation schématique d'un écran selon l'invention.

Sur les figures, un élément apparaissant sur plusieurs figures conserve la même référence.

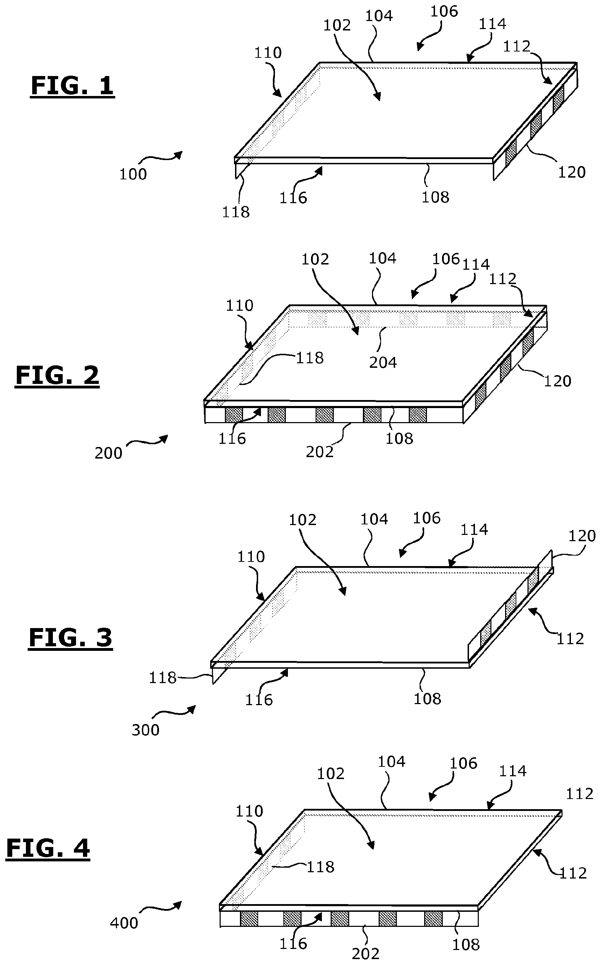

Les figures 1 à 4 sont des représentations schématiques de quatre modes de réalisation 100-400 d'une interface selon l'invention.

Dans chacun des modes de réalisation 100-400, l'interface comprend une surface de contact 102 entièrement transparente constituée par l'une des surfaces, par exemple la surface supérieure 104, d'une plaque 106, dite de contact, réalisée en un matériau transparent tel que du verre. La plaque de verre 106 comporte une surface inférieure 108 opposée à la surface supérieure.

Dans les exemples non limitatifs représentés sur les figures 1 à 4, la plaque de verre 106 est en forme de rectangle et d'épaisseur 0.9 mm. Les côtés de plus petite longueur sont les côtés 110 et 112 et mesurent 59 mm et les côtés de plus grande longueur sont les côtés 114 et 116 et mesurent 83 mm.

Dans le mode de réalisation représenté en figure 1, l'interface 100 comporte deux couches piézoélectriques 118 et 120 disposées sur les côtés opposés 110 et 112 de plus faibles longueurs, perpendiculairement à la surface de contact 102. Les deux couches piézoélectriques 118 et 120 font saillie du même côté de la plaque de contact 106 à savoir du côté de la surface inférieure 108.

Dans le mode de réalisation représenté en figure 2, l'interface 200 comporte deux couches piézoélectriques 118 et 120 disposées sur les côtés opposés 110 et 112 de plus faibles longueurs, perpendiculairement à la surface de contact 102. L'interface 200 comporte en outre deux autres couches piézoélectriques 202 et 204 disposées sur les côtés opposés 116 et 114 de plus grandes longueurs encore perpendiculairement à la surface de contact 102. Les quatre couches piézoélectriques 118 et 120, et 202 et 204 font saillie du même côté de la plaque de contact 106 à savoir du côté de la surface inférieure 108. Autrement dit, les couches 118 et 120 sont parallèles entre elles, perpendiculaires à chacune des couches 202 et 204, et chacune des couches 118, 120, 202 et 204 est perpendiculaire à la surface de contact 102.

Dans le mode de réalisation représenté en figure 3, l'interface 300 comporte deux couches piézoélectriques 118 et 120 disposées sur les côtés opposés 110 et 112 de plus faibles longueurs, perpendiculairement à la surface de contact 102. Cependant, l'une des couches piézoélectriques, à savoir la couche 118 fait saillie du côté de la surface inférieure 108 de la plaque 106 alors que l'autre des couches piézoélectrique, à savoir la couche 120, fait saillie du côté de la surface supérieure 106 de la plaque 106, c'est-à-dire la surface de contact. Autrement dit, les couches piézoélectriques 118 et 120 sont perpendiculaires à la surface de contact 102, l'une faisant saillie, s'étendant ou dépassant de la surface de contact 102 d'un côté de cette surface 102 et l'autre du côté opposé.

Dans le mode de réalisation représenté en figure 4, l'interface 400 comporte une couche piézoélectrique 118 disposée sur un des côtés de la plaque 106 de plus faible longueur, à savoir le côté 110, perpendiculairement à la surface de contact 102. L'interface 400 comporte en outre une autre couche piézoélectrique 202 disposée sur un des côtés de la plaque de plus grande longueur, à savoir le côté 116, encore perpendiculairement à la surface de contact 102. Les deux couches piézoélectriques 118 et 202 font saillie du même côté de la plaque de contact 106 à savoir du côté de la surface inférieure 108, c'est-à-dire la surface opposée à la surface de contact 102. De plus, les couches 118 et 202 sont perpendiculaires entre elles et à la surface de contact 102.

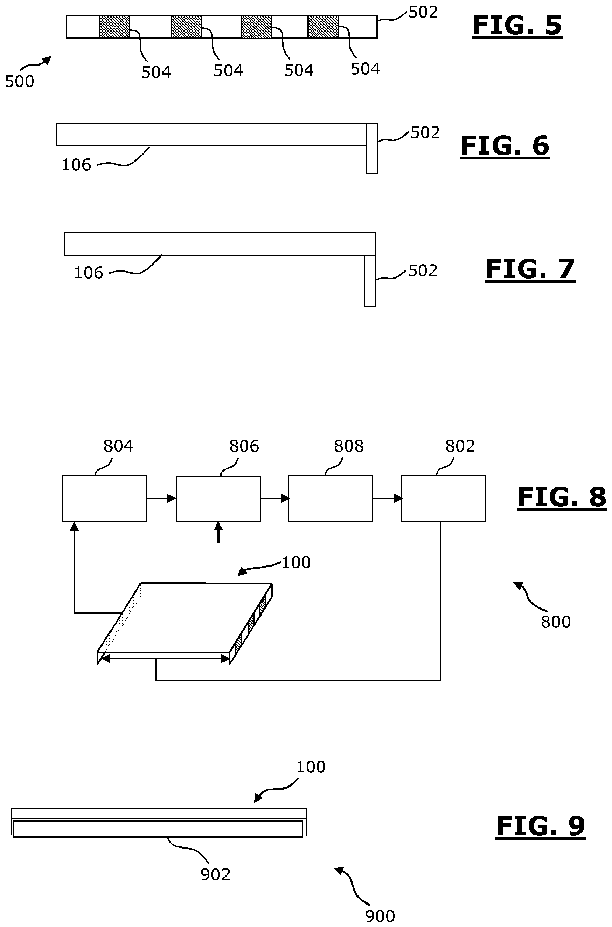

Dans les exemples non limitatifs décrits en référence aux figures 1 à 4, chaque couche piézoélectrique est composée d'une plaque de cuivre 502, dite de support, sur laquelle sont disposées plusieurs cellules piézoélectriques 504 telles que représentées sur la figure 5. Chaque cellule piézoélectrique peut être collée sur la plaque de support par collage, en utilisant une colle cyano-acrylate ou toute autre colle polymérisant à haute température telle qu'une colle époxyde. Selon un exemple de réalisation, les dimensions de la plaque sont 0.9 mm x 59 mm x 83 mm.

Chaque couche piézoélectrique peut être disposée sur la plaque de contact selon au moins l'une des deux configurations représentées sur les figures 6 et 7.

Dans la configuration représentée sur la figure 6, la plaque de support 502 est disposée sur/contre un chant de la plaque de contact 106. Cette configuration présente l'avantage de pouvoir utiliser la totalité de la surface de contact pour l'affichage. En effet, dans cette configuration, la plaque de contact ne gêne pas l'observation au travers de la plaque de contact 106 sur la totalité de la surface de contact.

Dans la configuration représentée sur la figure 7, la plaque de support 502 est disposée sur la plaque de contact 106 par un de ses chants. Cette configuration présente l'avantage d'obtenir une construction plus robuste.

Même si, dans cette configuration, la plaque de contact se trouve dans la direction d'observation au travers de la surface de contact, son épaisseur étant très faible, la surface perdue pour l'affichage est aussi très faible.

Quelle que soit la configuration choisie, la plaque de support peut être disposée sur la plaque de contact par collage par exemple en utilisant en utilisant une colle cyano-acrylate, ou toute autre colle polymérisant à haute température telle qu'une colle époxyde.

Dans l'invention, les cellules piézoélectriques ne sont plus collées sous la plaque vibrante et, de plus, l'excitation de cette plaque vibrante se fait à deux noeuds de l'onde, voire avantageusement d'une ligne de noeuds. A ce niveau, sur ces noeuds, les cellules piézoélectriques permettent d'appliquer un moment de force motrice. Dans les exemples donnés, les noeuds choisis sont les noeuds situés sur les bords de la plaque vibrante, mais il est possible d'exciter la plaque à partir d'autres noeuds - moyennant l'adaptation de certains autres paramètres tels que la taille de la plaque transparente, son épaisseur et la longueur de la ou des plaques de support.

Dans les exemples donnés, la plaque de contact utilisée est une plaque de cuivre, mais d'autres matériaux sont possibles, si besoin moyennant l'adaptation des dimensions de cette plaque, et plus précisément de la longueur et l'épaisseur de la plaque de support, le but étant de garder l'adaptation de la plaque de support à la plaque de contact en terme de fréquence de résonance.

Par ailleurs, dans les exemples représentés, les cellules piézoélectriques ne sont présentes que sur une face de la plaque de support. Il est possible, selon l'invention, de disposer des cellules piézoélectriques sur les deux faces, par exemple pour obtenir une plus grande amplitude de vibration de la surface de contact avec un même nombre de cellules.

Dans les exemples représentés, les chants des différentes plaques ont été représentés à angle droit, mais ces chants peuvent présenter d'autre profils tels que des chants présentant des profils d'emboîtements entre la plaque de support et la plaque de contact, ou des chanfreins, du moment que l'assemblage permet de transmettre un couple et plutôt qu'une simple force unidirectionnelle et que la plaque de support est disposée sur la plaque de contact suivant une ligne neutre de vibration, aussi appelé noeuds. Pour identifier la position des lignes de noeuds, il est possible de faire une simulation pour obtenir l'analyse modale de l'ensemble mécanique et de là trouver la position des lignes de noeuds.

En effet, dans la présente invention, l'excitation de la plaque de contact, et par conséquent de la surface de contact, par la ou les plaques de support s'effectue par une ligne de noeuds. La demande de brevet européen EP 1 956 466 donne plus de détails sur les lignes de noeuds bien connues de l'homme du métier.

La figure 8 est une représentation schématique d'un fonctionnement d'une interface tactile selon l'invention.

L'interface tactile 800 représentée sur la figure 8 comporte un module d'alimentation 802 permettant d'alimenter les couches piézoélectriques de l'interface, par exemple et de manière non limitative l'interface 100. L'interface 800 comporte également un capteur 804 de position de vitesse et/ou d'accélération du doigt d'un utilisateur ou d'un pointeur placé sur la surface de contact 102. La ou les données captées par le capteur 804 est/sont fournie(s) à un module 806 réalisant une transformation spatiotemporelle de ces données en fonction d'une consigne, par exemple la période de la texture que l'on souhaite simuler. Le résultat du calcul est fourni à un module 808 qui fournit une consigne de tension, de fréquence ou de phase au module d'alimentation 802 qui alimente en tension électrique les couches piézoélectriques, afin de moduler l'effet « Squeeze film », la texture et/ou l'orientation de texture, et plus généralement pour moduler l'effet tactile créé.

La figure 9 est une représentation schématique d'un écran d'affichage 900 selon l'invention.

L'écran d'affichage 900 comprend une interface tactile selon l'invention, par exemple et de manière non limitative l'interface 100 et un moyen d'affichage 902 tel qu'un écran LCD.

Bien entendu, l'invention n'est pas limitée aux exemples détaillés ci-dessus.

## Revendications

1. Interface tactile (100, 200, 300, 400, 800) comportant une surface de contact (102) et des moyens de mise en vibration (118, 120, 202, 204, 500) de ladite surface de contact (102) prévus pour générer dans ladite surface de contact (102) des ondes stationnaires :
- ladite surface de contact (102) comprend au moins une partie transparente réalisant une surface d'observation au travers de ladite interface tactile (100, 200, 300, 400, 800), et
- lesdits moyens de mise en vibration comprennent au moins une couche piézoélectrique (118, 120, 202, 204, 500) rigide, solidaire de ladite surface de contact (102) et disposée à la périphérie de ladite partie transparente ; et
ladite interface (100, 200, 300, 400, 800) étant **caractérisée en ce que** ladite au moins une couche piézoélectrique (118, 120, 202, 204, 500) est disposée dans un plan non parallèle à la surface de contact (102).

2. Interface (100, 200, 300, 400, 800) selon la revendication 1, **caractérisée en ce qu'**au moins une couche piézoélectrique (118, 120, 202, 204, 500) est disposée dans un plan présentant un angle compris entre 45° et 90° par rapport à la surface de contact (102).

3. Interface (100, 200, 300, 400, 800) selon l'une quelconque des revendications précédentes, **caractérisée en ce qu'**au moins une couche piézoélectrique (118, 120, 202, 204, 500) est disposée dans un plan perpendiculaire à la surface de contact (102).

4. Interface (100, 200, 400, 800) selon l'une quelconque des revendications précédentes, **caractérisée en ce qu'**elle comporte plusieurs couches piézoélectriques (118, 120, 202, 204, 500) rigides, solidaires de ladite surface de contact (102), au moins deux couches piézoélectriques (118,120 ; 202,204 ; 118,202) étant disposées du même côté de la surface de contact.

5. Interface (300) selon l'une quelconque des revendications précédentes, **caractérisée en ce qu'**elle comporte plusieurs couches piézoélectriques (118, 120) rigides, solidaires de ladite surface de contact (102), au moins deux couches (118, 120) étant disposées d'un côté et de l'autre de la surface de contact (102).

6. Interface (100, 200, 300, 400, 800) selon l'une quelconque des revendications précédentes, **caractérisée en ce que** :
- la surface de contact (102) est réalisée par une plaque (106), dite de contact, et
- au moins une couche piézoélectrique (118, 120, 202, 204, 500) comporte une plaque rigide (502), dite de support ; et
ladite au moins une plaque de support (502) est disposée sur la tranche de ladite plaque de contact (106).

7. Interface (100, 200, 300, 400, 800) selon l'une quelconque des revendications précédentes, **caractérisée en ce que** :
- la surface de contact (102) est réalisée par une plaque (106), dite de contact, et
- au moins une couche piézoélectrique (118, 120, 202, 204, 500) comporte une plaque rigide (502), dite de support ; et
ladite au moins une plaque de support (502) est disposée sur ladite plaque de contact (106) par une de ses tranches.

8. Interface (100, 200, 300, 400, 800) selon la revendication 7, **caractérisée en ce que** l'au moins une plaque de support (502) est disposée sur la plaque de contact (106) de sorte que ladite plaque de support (502) fait saillie vers un seul côté de la plaque de contact (106).

9. Interface selon l'une quelconque des revendications 6 à 8, **caractérisé en ce qu'**au moins une plaque de support (502) est en cuivre ou en un alliage à base de cuivre.

10. Interface (100, 200, 300, 800) selon l'une quelconque des revendications précédentes, **caractérisée en ce que** la surface de contact (102) est de forme parallélépipédique et deux couches piézoélectriques sont disposées sur deux côtés opposés (110,112 ; 114,116) de ladite forme parallélépipédique.

11. Interface (100, 200, 300, 400, 800) selon l'une quelconque des revendications précédentes, **caractérisée en ce qu'**au moins une couche piézoélectrique (118, 120, 202, 204, 500) comprend une rangée d'au moins deux cellules piézoélectriques (504).

12. Interface (100, 200, 300, 400, 800) selon l'une quelconque des revendications précédentes, **caractérisée en ce que** la surface de contact (102) est en verre transparent, en plastique rigide, en polycarbonate, en plexiglas, ou une combinaison quelconque d'au moins deux de ces matériaux.

13. Interface (100, 200, 300, 400, 800) selon l'une quelconque des revendications précédentes, **caractérisée en ce que** les moyens de mise en vibration de la surface comprennent des moyens (802) d'alimentation électrique connectés à chacune desdites couches piézoélectriques (118, 120, 202, 204, 500).

14. Interface (100, 200, 300, 400, 800) selon l'une quelconque des revendications précédentes, **caractérisée en ce qu'**elle comprend en outre des moyens (804) pour capter une position, une vitesse et/ou une accélération d'un doigt d'un utilisateur ou d'un pointeur ou une combinaison quelconque d'au moins deux de ces grandeurs.

15. Interface (100, 200, 300, 400, 800) selon les revendications 13 et 14, **caractérisée en ce qu'**elle comporte en outre des moyens (806, 808) pour commander et faire varier une amplitude, une phase et/ou une fréquence de l'alimentation électrique délivrée par les moyens (802) d'alimentation électrique ou une combinaison quelconque d'au moins deux de ces grandeurs.

16. Ecran (900) d'affichage tactile pour appareil électronique comprenant une interface tactile (100, 200, 300, 400, 800) selon l'une quelconque des revendications précédentes et un écran d'affichage graphique (902) visible au travers de la partie transparente.

17. Appareil électronique comprenant un écran d'affichage tactile (900) selon la revendication 16.

## Patentansprüche

1. Berührungsempfindliche Schnittstelle (100, 200, 300, 400, 800), eine Berührungsfläche (102) und Mittel (118, 120, 202, 204, 500) enthaltend, welche die Berührungsfläche (102) in Vibration versetzen und zur Erzeugung von Stehwellen in der Berührungsfläche (102) ausgelegt sind:
- die Berührungsfläche (102) umfasst mindestens einen durchsichtigen Teil, der eine Beobachtungsfläche durch die berührungsempfindliche Schnittstelle (100, 200, 300, 400, 800) hindurch bildet, und
- die in Vibration versetzenden Mittel umfassen mindestens eine starre, mit der Berührungsfläche (102) fest verbundene, piezoelektrische Schicht (118, 120, 202, 204, 500), die am Rand des durchsichtigen Teils angeordnet ist; und
wobei die Schnittstelle (100, 200, 300, 400, 800) **dadurch gekennzeichnet ist, dass** die mindestens eine piezoelektrische Schicht (118, 120, 202, 204, 500) in einer zur Berührungsfläche (102) nicht parallel laufenden Ebene gelagert ist.

2. Schnittstelle (100, 200, 300, 400, 800) nach Anspruch 1, **dadurch gekennzeichnet, dass** mindestens eine piezoelektrische Schicht (118, 120, 202, 204, 500) in einer Ebene gelagert ist, die einen Winkel zwischen 45°-90° mit der Berührungsfläche (102) bildet.

3. Schnittstelle (100, 200, 300, 400, 800) nach einem der vorhergehenden Ansprüche, **dadurch gekennzeichnet, dass** mindestens eine piezoelektrische Schicht (118, 120, 202, 204, 500) in einer rechtwinklig zur Berührungsfläche (102) laufenden Ebene gelagert ist.

4. Schnittstelle (100, 200, 400, 800) nach einem der vorhergehenden Ansprüche, **dadurch gekennzeichnet, dass** sie mehrere starre, mit der Berührungsfläche (102) fest verbundene, piezoelektrische Schichten (118, 120, 202, 204, 500) umfasst, wobei mindestens zwei piezoelektrische Schichten (118, 120; 202, 204; 118, 202) auf derselben Seite der Berührungsfläche gelagert sind.

5. Schnittstelle (300) nach einem der vorhergehenden Ansprüche, **dadurch gekennzeichnet, dass** sie mehrere piezoelektrische Schichten (118, 120) umfasst, welche starr, mit der Berührungsfläche (102) fest verbunden sind, wobei mindestens zwei piezoelektrische Schichten (118, 120) auf jeweils einer Seite der Berührungsfläche (102) gelagert sind.

6. Schnittstelle (100, 200, 300, 400, 800) nach einem der vorhergehenden Ansprüche, **dadurch gekennzeichnet, dass**:
- die Berührungsfläche (102) anhand einer sogenannten Berührungsplatte (106) hergestellt ist, und
- mindestens eine piezoelektrische Schicht (118, 120, 202, 204, 500) eine starre, sogenannte Trägerplatte (502) enthält; und
die mindestens eine Trägerplatte (502) auf der Kante der Berührungsplatte (106) angeordnet ist.

7. Schnittstelle (100, 200, 300, 400, 800) nach einem der vorhergehenden Ansprüche, **dadurch gekennzeichnet, dass**:
- die Berührungsfläche (102) anhand einer sogenannten Berührungsplatte (106) hergestellt ist, und
- mindestens eine piezoelektrische Schicht (118, 120, 202, 204, 500) eine starre, sogenannte Trägerplatte (502) enthält; und
die mindestens eine Trägerplatte (502) auf der Berührungsplatte (106) über eine ihrer Kanten angeordnet ist.

8. Schnittstelle (100, 200, 300, 400, 800) nach Anspruch 7, **dadurch gekennzeichnet, dass** die mindestens eine Trägerplatte (502) auf der Berührungsplatte (106) derart gelagert ist, dass die Trägerplatte (502) zu einer einzigen Seite der Berührungsplatte (106) herausragt.

9. Schnittstelle nach einem der Ansprüche 6-8, **dadurch gekennzeichnet, dass** mindestens eine Trägerplatte (502) aus Kupfer oder aus einer Legierung auf Kupferbasis besteht.

10. Schnittstelle (100, 200, 300, 800) nach einem der vorhergehenden Ansprüche, **dadurch gekennzeichnet, dass** die Berührungsfläche (102) die Form eines Parallelepipeds hat und dass zwei piezoelektrische Schichten an zwei gegenüberliegenden Seiten (110, 112; 114, 116) der Parallelepipedform angeordnet sind.

11. Schnittstelle (100, 200, 300, 400, 800) nach einem der vorhergehenden Ansprüche, **dadurch gekennzeichnet, dass** mindestens eine piezoelektrische Schicht (118, 120, 202, 204, 500) eine Reihe von mindestens zwei piezoelektrischen Zellen (504) enthält.

12. Schnittstelle (100, 200, 300, 400, 800) nach einem der vorhergehenden Ansprüche, **dadurch gekennzeichnet, dass** die Berührungsfläche (102) aus durchsichtigem Glas, aus starrem Kunststoff, aus Polycarbonat, aus Plexiglas oder aus irgendeiner Verbindung von mindestens zwei dieser Stoffe besteht.

13. Schnittstelle (100, 200, 300, 400, 800) nach einem der vorhergehenden Ansprüche, **dadurch gekennzeichnet, dass** die die Fläche in Vibration versetzenden Mittel Stromversorgungsmittel (802) umfassen, welche mit jeder der piezoelektrischen Schichten (118, 120, 202, 204, 500) verbunden sind.

14. Schnittstelle (100, 200, 300, 400, 800) nach einem der vorhergehenden Ansprüche, **dadurch gekennzeichnet, dass** sie außerdem Mittel (804) zur Erfassung einer Position, einer Geschwindigkeit und/oder einer Beschleunigung eines Fingers eines Benutzers oder eines Zeigers, oder einer Kombination von mindestens zwei dieser Daten.

15. Schnittstelle (100, 200, 300, 400, 800) nach einem der Ansprüche 13 oder 14, **dadurch gekennzeichnet, dass** sie außerdem Mittel (806, 808) zum Steuern und Variieren einer Amplitude, einer Phase und/oder einer Frequenz der durch das Stromversorgungsmittel gelieferten Stromversorgung (802), oder einer Kombination von mindestens zwei dieser Größen.

16. Berührungsempfindlicher Bildschirm (900) für ein elektronisches Gerät, eine berührungsempfindliche Schnittstelle (100, 200, 300, 400, 800) nach einem der vorhergehenden Ansprüche sowie einen grafischen, durch den durchsichtigen Teil sichtbaren Bildschirm (902) umfassend.

17. Elektronisches Gerät, einen berührungsempfindlichen Bildschirm (900) nach Anspruch 16 umfassend.

## Claims

1. Touch interface (100, 200, 300, 400, 800) comprising a contact surface (102) and means of vibrating (118, 120, 202, 204, 500) said contact surface (102) provided for generating stationary waves in said contact surface (102):
- said contact surface (102) comprises at least one transparent portion producing an observation surface through said touch interface (100, 200, 300, 400, 800), and
- said vibration means comprise at least one rigid piezoelectric layer (118, 120, 202, 204, 500), firmly fixed to said contact surface (102) and arranged on the periphery of said transparent portion; and
said interface (100, 200, 300, 400, 800) being **characterized in that** said at least one piezoelectric layer (118, 120, 202, 204, 500) is arranged in a plane non parallel to the contact surface (102).

2. Interface (100, 200, 300, 400, 800) according to claim 1, **characterized in that** at least one piezoelectric layer (118, 120, 202, 204, 500) is arranged in a plane having an angle comprised between 45° and 90° with respect to the contact surface (102).

3. Interface (100, 200, 300, 400, 800) according to any one of the preceding claims, **characterized in that** at least one piezoelectric layer (118, 120, 202, 204, 500) is arranged in a plane perpendicular to the contact surface (102).

4. Interface (100, 200, 400, 800) according to any one of the preceding claims, **characterized in that** it comprises several rigid piezoelectric layers (118, 120, 202, 204, 500), firmly fixed to said contact surface (102), at least two piezoelectric layers (118,120; 202, 204; 118, 202) being arranged on the same side of the contact surface.

5. Interface (300) according to any one of the preceding claims, **characterized in that** it comprises several rigid piezoelectric layers (118, 120), firmly fixed to said contact surface (102), at least two layers (118, 120) being arranged on one side and on the other side of the contact surface (102).

6. Interface (100, 200, 300, 400, 800) according to any one of the preceding claims, **characterized in that**:
- the contact surface (102) is produced by a plate (106), called a contact plate, and
- at least one piezoelectric layer (118, 120, 202, 204, 500) comprises a rigid plate (502), called a support plate; and
said at least one support plate (502) is arranged on the slice of said contact plate (106).

7. Interface (100, 200, 300, 400, 800) according to any one of the preceding claims, **characterized in that**:
- the contact surface (102) is produced by a plate (106), called a contact plate, and
- at least one piezoelectric layer (118, 120, 202, 204, 500) comprises a rigid plate (502), called a support plate; and
said at least one support plate (502) is arranged on said contact plate (106) by one of its edges.

8. Interface (100, 200, 300, 400, 800) according to claim 7, **characterized in that** the at least one support plate (502) is arranged on the contact plate (106) so that said support plate (502) projects towards only one side of the contact plate (106).

9. Interface according to any one of the claims 6 to 8, **characterized in that** at least one support plate (502) is made from copper or an alloy based on copper.

10. Interface (100, 200, 300, 800) according to any one of the preceding claims, **characterized in that** the contact surface (102) has a parallelepiped shape and two piezoelectric layers are arranged on two opposite sides (110,112; 114,116) of said parallelepiped shape.

11. Interface (100, 200, 300, 400, 800) according to any one of the preceding claims, **characterized in that** at least one piezoelectric layer (118, 120, 202, 204, 500) comprises a row of at least two piezoelectric cells (504).

12. Interface (100, 200, 300, 400, 800) according to any one of the preceding claims, **characterized in that** the contact surface (102) is made from transparent glass, rigid plastic, polycarbonate, Plexiglas, or any combination of at least two of these materials.

13. Interface (100, 200, 300, 400, 800) according to any one of the preceding claims, **characterized in that** the means of vibrating the surface comprise means (802) of electrical supply connected to each of said piezoelectric layers (118, 120, 202, 204, 500).

14. Interface (100, 200, 300, 400, 800) according to any one of the preceding claims, **characterized in that** it comprises moreover means (804) for picking up a position, a speed and/or an acceleration of a finger of a user or of a pointer or any combination of at least two of these variables.

15. Interface (100, 200, 300, 400, 800) according to claims 13 and 14, **characterized in that** it comprises moreover means (806, 808) for controlling and varying an amplitude, a phase and/or a frequency of the electrical supply delivered by the electrical supply means (802) or any combination of at least two of these variables.

16. Touch display screen (900) for an electronic device comprising a touch interface (100, 200, 300, 400, 800) according to any one of the preceding claims and a graphical display screen (902) visible through the transparent portion.

17. Electronic device comprising a touch display screen (900) according to claim 16.
